Europäisches Patentamt

European Patent Office

Office européen des brevets

(11) Veröffentlichungsnummer: **0 045 736**
**B1**

(12) **EUROPÄISCHE PATENTSCHRIFT**

(45) Veröffentlichungstag der Patentschrift:
**16.01.85**

(21) Anmeldenummer: **81890128.2**

(22) Anmeldetag: **21.07.81**

(51) Int. Cl.⁴: **B 01 D 45/14,** B 01 D 50/00,
E 21 F 5/20

(54) Einrichtung zum Abscheiden von Staubteilchen aus einem Luftstrom.

(30) Priorität: **05.08.80 AT 4045/80**

(43) Veröffentlichungstag der Anmeldung:
**10.02.82 Patentblatt 82/6**

(45) Bekanntmachung des Hinweises auf die Patenterteilung:
**16.01.85 Patentblatt 85/3**

(84) Benannte Vertragsstaaten:
**DE FR GB**

(56) Entgegenhaltungen:
**FR - A - 2 165 895**
**FR - A - 2 351 690**
**US - A - 2 441 631**
**US - A - 3 960 526**

(73) Patentinhaber: **VOEST-ALPINE Aktiengesellschaft,**
**Friedrichstrasse 4, A-1011 Wien (AT)**

(72) Erfinder: **Strahsner, Emanuel, Hangweg 46/6,**
**A-8740 Zeltweg (AT)**

(74) Vertreter: **Kretschmer, Adolf, Dipl.-Ing.,**
**Schottengasse 3a, A-1014 Wien (AT)**

ACTORUM AG

## Beschreibung

Die Erfindung bezieht sich auf eine Einrichtung zum Abscheiden von Staubteilchen aus einem Luftstrom, insbesondere für die Bewetterung von Gruben, mit einem mit ungefähr gleichbleibender Geschwindigkeit rotierenden Zentrifugalabscheider, der axial aneinandergereihte, innerhalb eines ortsfesten Gehäuses rotierende Schaufelradabschnitte aufweist, deren Schaufeln am äusseren Ende an in Umfangsrichtung verlaufende mitrotierende Wandungen anschliessen, deren Abstand von der Achse sich in Strömungsrichtung der Luft vergrössert, von welchen Schaufelradabschnitten wenigstens einer radial gerichtete, ungefähr in Axialebene liegende Schaufeln aufweist, wobei an den Stellen des grössten Achsabstandes der in Umfangsrichtung verlaufenden Wandungen Durchtrittsöffnungen zum Gehäuse vorgesehen sind, mit einem den Luftstrom durch den Zentrifugalabscheider fördernden Gebläse und mit einer dem Zentrifugalabscheider in Strömungsrichtung der Luft vorgeschalteten Einrichtung zum Versprühen oder Vernebeln von Wasser, welches dem in den Zentrifugalabscheider eintretenden Luftstrom zugeführt wird.

Bei solchen bekannten Einrichtungen, bei welchen in allen Schaufelradabschnitten des Zentrifugalabscheiders die Schaufeln ungefähr in Axialebenen liegen, treffen die durch Wassertröpfchen gebundenen Staubteilchen und die diese führende Luft auf die Schaufeln des ersten Schaufelradabschnittes mit einer Geschwindigkeit, welche der vollen Umfangsgeschwindigkeit des Zentrifugalabscheiders entspricht, auf. Dadurch entstehen Stossverluste, deren Grösse mit dem Quadrat der Umfangsgeschwindigkeit der Schaufeln steigt. Die Aufnahme dieser Stossverluste erfordert eine hohe Leistung und da diese Stossverluste mit dem Quadrat der Umfangsgeschwindigkeit der Schaufeln ansteigen, ist dadurch auch die Drehzahl des Zentrifugalabscheiders begrenzt. Des weiteren ist bei den bekannten Einrichtungen dieser Art das Gebläse, welches die Luft durch den Zentrifugalabscheider hindurchgefördert, als gesonderte Baueinheit hinter dem Zentrifugalabscheider angeordnet und mit diesem über einen Kanal bzw. einen Schlauch verbunden. Auch die Umlenkung der Luft vom Zentrifugalabscheider zum Gebläse erfordert eine beträchtliche Leistung und auch dadurch ist die Drehzahl der Zentrifuge und des Gebläses begrenzt. Die bekannten Einrichtungen dieser Art weisen daher verhältnismässig grosse Baumasse auf, was gerade beim Einsatz in Gruben von Nachteil ist.

Die Erfindung stellt sich zur Aufgabe, die für den Antrieb eines solchen kleinbauenden Staubabscheiders erforderliche Leistung klein zu halten und eine Erhöhung der Drehzahl und damit eine Verbesserung der Wirkung der Zentrifuge zu ermöglichen. Die Erfindung besteht hiebei im wesentlichen darin, dass am Lufteintrittsende des Zentrifugalabscheiders dem oder den mit in Axialebenen liegenden Schaufeln ausgestatteten Schaufelradabschnitt(en) wenigstens ein Schaufelradabschnitt vorgeschaltet ist, in welchem die zur Achse äquidistant verlaufenden Erzeugenden der Schaufelflächen unter einem Anstellwinkel zu achsparallelen Linien der Axialebenen entgegen der Richtung, in welcher die Resultierende aus axialer Lufteintrittsgeschwindigkeit und Umfangsgeschwindigkeit der Schaufeln von der Axialebene abweicht, geneigt sind. Als Erzeugende werden hiebei die jeweils äquidistant zur Achse verlaufenden Linien bezeichnet, deren Summe die Oberfläche der Schaufeln ergibt.

Dadurch, dass in dem vorgeschalteten Schaufelradabschnitt die Schaufeln nicht in Axialebenen liegen, sondern entgegen der Richtung, in welcher die Resultierende von der Axialebene abweicht, geneigt sind, d.h. also ähnlich wie bei einem Axialgebläse schräggestellt sind, wird die Wucht des Aufpralles der Wassertröpfchen und der Luft auf die Schaufeln verringert und es werden dadurch die Stossverluste in diesem vorgeschalteten Schaufelradabschnitt wesentlich verkleinert. Wenn der Anstellwinkel ungefähr gleich dem Winkel ist, welchen die Resultierende mit der Axialen einschliesst, so ergibt sich bei der Rotation dieses vorgeschalteten Schaufelradabschnittes eine Situation, bei welcher die axial einströmende Luft parallel zu den rotierenden Schaufelflächen strömt. Es entfällt eine Bewegungskomponente der Luft bzw. der Wassertröpfchen relativ zu den Schaufelflächen und die Stossverluste wären daher in diesem vorgeschalteten Schaufelradabschnitt Null, wobei die Luft mit den Wassertröpfchen ungehindert durch diesen Schaufelradabschnitt hindurchströmt. Es ergeben sich aber dann Stossverluste in den mit axial gerichteten Schaufeln bestückten Schaufelradabschnitten.

Gemäss einer bevorzugten Ausführungsform der Erfindung ist dieser Anstellwinkel kleiner als der Winkel, welchen die Resultierende mit der Axialen einschliesst. Bei einer in einer Axialebene liegenden Schaufel sind diese Stossverluste gemäss Bernoulli proportional dem Quadrat der Umfangsgeschwindigkeit der Schaufeln. Da nun aber die Schaufeln schräggestellt sind, wirkt auf diese Schaufeln nur die senkrecht zur Schaufelebene stehende Komponente der Stosskraft und die Stossverluste werden in diesem vorgeschalteten Schaufelradabschnitt gegenüber den Stossverlusten bei in Axialebenen liegenden Schaufeln verringert. Da aber der Anstellwinkel der Schaufeln in diesem vorgeschalteten Schaufelradabschnitt kleiner ist als der Winkel, welchen die Resultierende mit der Axialen einschliesst, wird der Luft bzw. den Wassertröpfchen eine Bewegungskomponente in axialer Richtung und eine Bewegungskomponente in Richtung der Umfangsgeschwindigkeit erteilt. Die Bewegungskomponente in axialer Richtung unterstützt die Wirkung des Gebläses und die Bewegungskomponente in Richtung der Umfangsgeschwindigkeit bewirkt, dass die Luft mit den Wassertröpfchen in den nachgeschalteten Schaufelradabschnitt, in welchem die Schaufeln in Axialebenen liegen, bereits mit einer in Richtung der Umfangsgeschwindigkeit gerichteten Bewegungskomponente eintreten. In diesem mit in axialen Ebenen liegenden Schaufeln bestückten Schaufelradabschnitt hat somit die Luft bereits eine Bewegungskomponente in der Umfangsrichtung und diese Bewegungskomponente ist nun von der Umfangsgeschwindigkeit der Schaufeln abzuziehen, so dass die Geschwindigkeit, mit welcher die Tröpfchen und die Luft relativ zur Schaufel auf diese auftreffen, verringert wird. Die Relativgeschwindigkeit, mit welcher nun die Wassertröpfchen auf die in Axialebenen liegenden Schaufeln auftreffen, wird somit verringert und da, wie bereits erwähnt, die Stossverluste dem Quadrat der Geschwindigkeit proportional sind, erfolgt eine wesentliche Verringerung der Stossverluste in diesem mit in Axialebenen liegenden Schaufeln beschaufelten Laufradabschnitt. Es werden somit durch die Vorschaltung des mit schrägen Schaufeln bestückten Schaufelradabschnittes die Stossverluste insgesamt im Zentrifugalabscheider verringert. Wenn gemäss der Erfindung der Anstellwinkel ungefähr die Hälfte des Winkels beträgt, welchen die Resultierende mit der Axialen einschliesst, so ergibt sich im vorgeschalteten schräg beschaufelten Schaufelradabschnitt eine senkrecht zur Schaufelfläche gerichtete Geschwindigkeitskomponente relativ zur Schaufelfläche, welche nur ungefähr halb so gross ist wie bei einer Ausführung, bei welcher die Schaufeln in Axialebenen liegen würden, und im ersten mit in Axialebenen liegenden Schaufeln bestückten Schaufelradabschnitt weist die Luft mit den Wassertröpfchen eine Geschwindigkeit in Richtung der Umfangsgeschwindigkeit des Schaufelrades auf, welche halb so gross ist wie die Umfangsgeschwindigkeit der Schaufeln dieses Schaufelradabschnittes. In dem den vorgeschalteten Schaufelradabschnitten nachgeschalteten Schaufelradabschnitt bzw. in den nachgeschalteten Schaufelradabschnitten ist somit die relative Auftreffgeschwindigkeit der Luft und der Wassertröpfchen auf die Schaufelflächen halb so gross, als wenn die Luft in diese Schaufelradabschnitte axial einströmen würde. Es ergeben sich somit halbe Relativgeschwindigkeiten zwischen Luft bzw. Wassertröpfchen und Schaufelflächen und da die Stossverluste dem Quadrat der Auftreffgeschwindigkeiten proportional sind, werden somit die Stossverluste auf ein Viertel reduziert. Es ergibt sich somit insgesamt eine wesentliche Reduzierung der Stossverluste im Zentrifugalabscheider und es wird dadurch ermöglicht, die Drehzahl eines solchen Zentrifugalabscheiders wesentlich zu erhöhen und gleichzeitig die erforderliche Antriebsleistung wesentlich zu vermindern.

Dadurch, dass die Lufteintrittsöffnung in das Gebläse unmittelbar an die Luftaustrittsöffnung aus dem letzten Schaufelradabschnitt des Zentrifugalabscheiders anschliesst, werden auch Verluste am Austrittsende des Zentrifugalabscheiders weitgehend herabgesetzt, da ja die aus dem Zentrifugalabscheider austretende Luft bereits eine Bewegungskomponente in Richtung der Umfangsgeschwindigkeit aufweist, welche im Gebläse ausgenützt wird. Dies gilt insbesondere dann, wenn gemäss der Erfindung das Gebläse als Radialgebläse ausgebildet ist. Vorzugsweise ist die Lufteintrittsöffnung des Gebläses von der Luftaustrittsöffnung aus dem letzten Schaufelradabschnitt der Zentrifugalabscheider gebildet.

Die Resultierende aus axialer Lufteintrittsgeschwindigkeit und Umfangsgeschwindigkeit der Schaufeln hat naturgemäss in allen Radialabschnitten des vorgeschalteten Schaufelradabschnittes eine andere Richtung, da ja die Umfangsgeschwindigkeit mit dem Abstand von der Achse zunimmt.

Gemäss der Erfindung kann in allen Radialabschnitten der Schaufeln des vorgeschalteten Schaufelradabschnittes der Anstellwinkel dem Wert entsprechen, welcher sich unter Berücksichtigung der Umfangsgeschwindigkeit in dem betreffenden Radialabschnitt ergibt. In diesem Falle werden in allen Radialabschnitten die optimalen Bedingungen in gleicher Weise erfüllt. Hiebei kann die Ausbildung gemäss der Erfindung so getroffen sein, dass die Eintritts- und Austrittskanten der Schaufeln des vorgeschalteten Schaufelradabschnittes gekrümmt sind und der Zwischenbereich der Schaufeln unverwunden ist. Eine solche Ausbildung der Schaufeln ist jedoch verhältnismässig kostspielig. Es können daher gemäss einer vorteilhaften Ausführungsform der Erfindung die Schaufeln des vorgeschalteten Schaufelradabschnittes eben sein, wobei der Anstellwinkel dem Wert entspricht, welcher sich unter Berücksichtigung der in der Mitte der radialen Länge der Schaufeln auftretenden mittleren Umfangsgeschwindigkeit ergibt. In diesem Fall ergibt sich eine wesentlich einfachere und billigere Konstruktion der Schaufeln, da ebene Schaufeln leichter herzustellen sind, und die Annäherung ist immerhin so gross, dass sich immer noch ein guter Effekt ergibt.

Dadurch, dass die Verringerung der Stossverluste am Eintrittsende des Zentrifugalabscheiders und die Verringerung der Austrittsverluste eine Erhöhung der Drehzahl des Zentrifugalabscheiders ermöglichen, kann der Staubabscheider mit kleinerem Durchmesser ausgebildet sein. Infolge der höheren Drehzahl ist es aber auch möglich, die Anzahl der Schaufelradabschnitte des Zentrifugalabscheiders mit den in Axialebenen liegenden Schaufeln zu verringern. Dadurch kann die Baulänge des Abscheiders wesentlich verringert werden, wozu noch kommt, dass sich eine Verringerung der Baulänge dadurch ergibt, dass die Eintrittsöffnung des Gebläses unmittelbar an die Austrittsöffnung des Zentrifugalabscheiders anschliesst. Durch die Erhöhung der Drehzahl wird auch der Wirkungsgrad der Entstaubung verbessert. Die Verkleinerung der Baumasse ist im besonderen Masse bei Verwendung eines solchen Entstaubers im Grubenbetrieb, wo wenig Raum zur Verfügung steht, vorteilhaft.

Infolge der hohen Stossverluste war es bisher erforderlich, die Drehzahl des Zentrifugalabscheiders niedrig zu halten. Es ist aber vorteilhaft, die Drehzahl des Gebläses höher zu wählen, um einen guten Effekt des Gebläses zu erreichen. Da nun die Drehzahl des Zentrifugalabscheiders wesentlich höher gewählt werden kann, wird es ermöglicht, den Zentrifugalabscheider und das Gebläse mit gleicher Drehzahl anzutreiben und gemäss einer vorteilhaften Ausführungsform der Erfindung sind der Zentrifugalabscheider und das Gebläse auf einer gemeinsamen Welle angeordnet. Auch dadurch ergibt sich wieder eine Verringerung der Baulänge.

Gemäss der Erfindung können die Schaufelradabschnitte und/oder das Gebläse bzw. die Gebläsestufen in einzelne Baueinheiten unterteilt sein, welche auf die gemeinsame Welle aufsteckbar und drehsicher mit dieser verbindbar sind. Dadurch ergibt sich die Möglichkeit, nach dem Baukastensystem den Abscheider durch Anordnung eines zusätzlichen Schaufelradabschnittes des Zentrifugalabscheiders oder Entfernung eines solchen Abschnittes und auch durch Wahl der Anzahl der Gebläsestufen den verschiedenen auftretenden Anforderungen, beispielsweise der verschieden grossen Staubentwicklung in Gruben, anzupassen.

In vorteilhafter Weise ist die Ausbildung hiebei so getroffen, dass die Lufteintrittsöffnung in das Gebläse unmittelbar an die Luftaustrittsöffnung aus dem letzten Schaufelradabschnitt des Zentrifugalabscheiders anschliesst.

In der Zeichnung ist die Erfindung an Hand eines Ausführungsbeispieles schematisch erläutert.

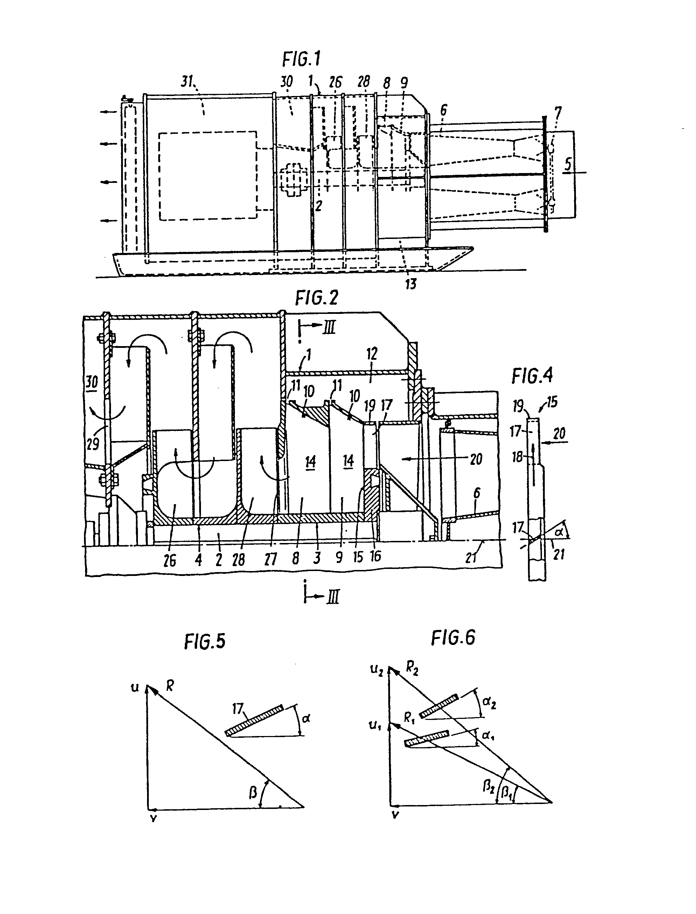

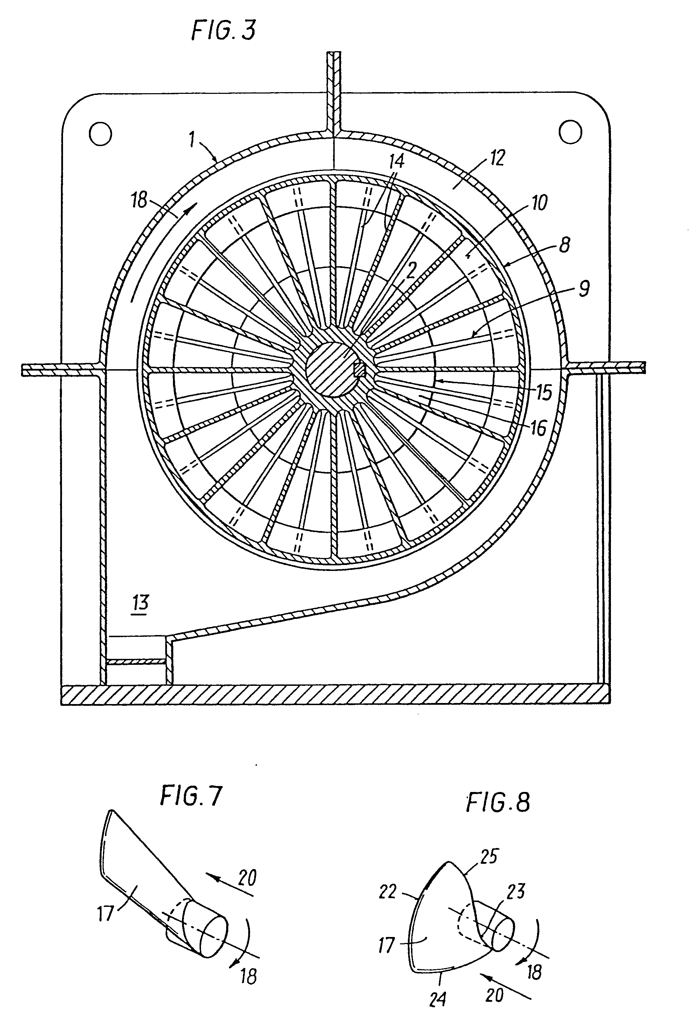

Fig. 1 zeigt die Gesamtanordnung und Fig. 2 einen Ausschnitt aus Fig. 1, welcher einen Axialschnitt durch den Zentrifugalabscheider und das Gebläse darstellt. Fig. 3 zeigt einen Schnitt nach Linie III-III der Fig. 2. Fig. 4 zeigt eine Ansicht des vorgeschalteten Laufradabschnittes senkrecht zur Achse. Fig. 5 und 6 zeigen Geschwindigkeitsdiagramme. Fig. 7 und 8 zeigen Schaufelformen der Schaufeln des vorgeschalteten Laufradabschnittes.

In einem Gehäuse 1 ist auf einer gemeinsamen Welle 2 ein Zentrifugalabscheider 3 und ein Gebläse 4 rotierbar gelagert. Der Lufteintritt ist durch einen Pfeil 5 bezeichnet. 6 sind Venturirohre und 7 sind Sprühdüsen, welche der durch die Venturirohre 6 strömenden Luft Wasser in versprühter oder vernebelter Form zuführen, wobei die Wassertröpfchen in den Venturirohren innig mit der strömenden Luft vermischt werden. Durch das Gebläse 4 wird die Luft durch die Venturirohre 6 und den Zentrifugalabscheider 3 hindurchgesaugt.

Der Zentrifugalabscheider 3 weist zwei Laufradabschnitte 8 und 9 mit Schaufeln 14 auf, welche in Axialebenen liegen und sich radial erstrecken. Durch diese Schaufeln 14 wird die durch den Zentrifugalabscheider 3 hindurchströmende Luft erfasst und in Rotationsrichtung mitgenommen. Hiebei prallen die durch die Wassertröpfchen beschwerten Staubteilchen auf die Schaufeln auf. Durch die Zentrifugalwirkung gelangen die mit Wasser beschwerten Staubteilchen auf trichterförmig sich erweiternde Wandungen 10, welche mit den Schaufeln 14 verbunden sind, und werden über Öffnungen 11 in einen den Zentrifugalabscheider umgebenden Gehäuseraum 12 gefördert, von wo aus sie in einen Sumpf im unteren Teil 13 des Gehäuseraumes 12 gelangen.

Den Schaufelradabschnitten 8 und 9 ist ein Schaufelradabschnitt 15 in Strömungsrichtung der Luft vorgeschaltet, in welchem die Schaufeln 17 nicht in sich radial erstreckenden Axialebenen liegen, sondern zu diesen Axialebenen unter einem Winkel $\alpha$ (siehe Fig. 4) schräggestellt sind. Dieser Schaufelradabschnitt 15 ist gleichfalls über seine Nabe 16 mit der Welle 2 drehsicher verbunden und rotiert daher mit der gleichen Drehgeschwindigkeit wie die Schaufelradabschnitte 8 und 9.

Die Drehrichtung der Schaufelradabschnitte ist in Fig. 3 und in Fig. 4 mit dem Pfeil 18 bezeichnet. In Fig. 4 ist der vorgeschaltete Laufradschnitt 15 in Seitenansicht dargestellt, wobei die diesen Schaufelradabschnitt begrenzende Umfangswandung 19 in der Mitte aufgerissen ist, um die Stellung der Schaufeln 17 zu zeigen.

Fig. 5 zeigt im Diagramm den Strömungsverlauf der Luft. Die Luft gelangt in Richtung des Pfeiles 20 zum Laufradabschnitt 15 mit einer Geschwindigkeit v. u ist die in der halben radialen Länge der Schaufeln 17 auftretende mittlere Umfangsgeschwindigkeit. Die Resultierende aus der Eintrittsgeschwindigkeit v und der mittleren Umfangsgeschwindigkeit u ist mit R bezeichnet. Der Winkel, um welchen die Resultierende R von der Axialen abweicht, ist mit $\beta$ bezeichnet. Die Schaufeln 17 sind nun unter dem Anstellwinkel $\alpha$ entgegen der Richtung, in welcher die Resultierende aus der axialen Lufteintrittsgeschwindigkeit v und der mittleren Umfangsgeschwindigkeit u von der Axialebene 21 abweicht, gegen diese Axialebene 21 geneigt. Durch den Laufradabschnitt 15 mit den schräggestellten Schaufeln 17 wird daher der in die Laufradabschnitte 8 und 9 eintretenden Luft bereits eine Geschwindigkeitskomponente in Richtung der Umfangsgeschwindigkeit u erteilt, so dass die Aufprallwucht der Luft und der Tröpfchen auf die Schaufeln 14 vermindert wird.

Gemäss dem Diagramm nach Fig. 5 ist angenommen, dass die Schaufeln in allen Radialabschnitten den gleichen Anstellwinkel $\alpha$ aufweisen, wobei nur die mittlere Umfangsgeschwindigkeit u berücksichtigt ist. Dies gilt für eine Schaufelform nach Fig. 7, wobei die Schaufeln 17 eben sind und daher in einfacher Weise mit geringem Kostenaufwand hergestellt werden können.

Am inneren Ende der Schaufeln ist die Umfangsgeschwindigkeit $u_1$ naturgemäss kleiner als die Umfangsgeschwindigkeit $u_2$ am äusseren Ende der Schaufeln. Dies ist im Diagramm nach Fig. 6 dargestellt. Es ist daher der Winkel $\beta_1$, welchen die Resultierende $R_1$ mit der Axialebene 21 einschliesst, kleiner als der Winkel $\beta_2$, welchen die Resultierende $R_2$ mit dieser Axialebene ein-

schliesst. In diesem Falle sind die Schaufeln 17 räumlich gekrümmt, wie Fig. 8 zeigt. Die Herstellung solcher Schaufeln ist naturgemäss kostspieliger. In Fig. 8 ist der Schaufelumfang mit 22, die Schaufelbasis mit 23, die Eintrittskante mit 24 und die Austrittskante mit 25 bezeichnet. Die Drehrichtung ist wieder mit dem Pfeil 18 bezeichnet.

An das Austrittsende des Zentrifugalabscheiders 3 ist unmittelbar das Gebläse 26 angeschlossen. 27 ist die Austrittsöffnung der Luft aus dem Zentrifugalabscheider 3, welche von einem achsnahen Ringspalt gebildet ist, und diese Austrittsöffnung 27 bildet zugleich die Eintrittsöffnung in die erste Stufe 28 des Gebläses 4. Der Strömungsweg der Luft in der Austritts- und Eintrittsöffnung 27 und im Gebläse ist mit Pfeilen angedeutet. Durch einen Ringspalt 29 tritt die Luft aus dem Gebläse in einen Raum 39 aus, aus welchem sie über einen nachgeschalteten Staubfilter 31 ausgeblasen wird.

## Patentansprüche

1. Einrichtung zum Abscheiden von Staubteilchen aus einem Luftstrom, insbesondere für die Bewetterung von Gruben, mit einem mit ungefähr gleichbleibender Geschwindigkeit rotierenden Zentrifugalabscheider (3), der axial aneinandergereihte, innerhalb eines ortsfesten Gehäuses rotierende Schaufelradabschnitte (8, 9) aufweist, deren Schaufeln (14) am äusseren Ende an in Umfangsrichtung verlaufende mitrotierende Wandungen (10) anschliessen, deren Abstand von der Achse sich in Strömungsrichtung der Luft vergrössert, von welchen Schaufelradabschnitten (8, 9) wenigstens einer radial gerichtete, in Axialebenen liegende Schaufeln (14) aufweist, wobei an den Stellen des grössten Achsabstandes der in Umfangsrichtung verlaufenden Wandungen (10) Durchtrittsöffnungen (11) zum Gehäuse vorgesehen sind, mit einem den Luftstrom durch den Zentrifugalabscheider fördernden Gebläse (4) und mit einer dem Zentrifugalabscheider (3) in Strömungsrichtung der Luft vorgeschalteten Einrichtung (6, 7) zum Versprühen oder Vernebeln von Wasser, welches dem in den Zentrifugalabscheider (3) eintretenden Luftstrom zugeführt wird, dadurch gekennzeichnet, dass am Lufteintrittsende (5) des Zentrifugalabscheiders (3) dem oder den mit in Axialebenen liegenden Schaufeln (14) ausgestatteten Schaufelradabschnitt(en) (8, 9) wenigstens ein Schaufelradabschnitt (15) vorgeschaltet ist, in welchem die zur Achse äquidistant verlaufenden Erzeugenden der Schaufelflächen (Schaufeln 17) unter einem Anstellwinkel ($\alpha$) zu achsparallelen Linien der Axialebenen (21) entgegen der Richtung, in welcher die Resultierende (R) aus axialer Lufteintrittsgeschwindigkeit (v) und Umfangsgeschwindigkeit (u) der Schaufeln (17) von der Axialebene (21) abweicht, geneigt sind.

2. Einrichtung nach Anspruch 1, dadurch gekennzeichnet, dass der Anstellwinkel ($\alpha$) kleiner ist als der Winkel ($\beta$), welche die Resultierende (R) mit der Axialebene (21) einschliesst.

3. Einrichtung nach Anspruch 1, dadurch gekennzeichnet, dass der Anstellwinkel ($\alpha$) ungefähr die Hälfte des Winkels ($\beta$) beträgt, welchen die Resultierende (R) mit der Axialebene (21) einschliesst.

4. Einrichtung nach einem der Ansprüche 1 bis 3, dadurch gekennzeichnet, dass in allen Radialabschnitten der Schaufeln (17) des vorgeschalteten Schaufelradabschnittes (15) der Anstellwinkel ($\alpha$) dem Wert entspricht, welcher sich unter Berücksichtigung der Umfangsgeschwindigkeit (u) in dem betreffenden Radialabschnitt ergibt.

5. Einrichtung nach Anspruch 4, dadurch gekennzeichnet, dass die Eintritts- und Austrittskanten (24, 25) der Schaufeln (17) des vorgeschalteten Schaufelradabschnittes (15) gekrümmt sind und der Zwischenbereich der Schaufeln unverwunden ist.

6. Einrichtung nach einem der Ansprüche 1 bis 3, dadurch gekennzeichnet, dass die Schaufeln (17) des vorgeschalteten Schaufelradabschnittes (15) eben sind und der Anstellwinkel ($\alpha$) dem Wert entspricht, welcher sich unter Berücksichtigung der in der Mitte der radialen Länge der Schaufeln (17) auftretenden mittleren Umfangsgeschwindigkeit (u) ergibt.

7. Einrichtung nach einem der Ansprüche 1 bis 6, dadurch gekennzeichnet, dass das Gebläse (4) ein Radialgebläse ist.

8. Einrichtung nach einem der Ansprüche 1 bis 7, dadurch gekennzeichnet, dass der Zentrifugalabscheider (3) und das Gebläse (4) auf einer gemeinsamen Welle (2) angeordnet sind.

9. Einrichtung nach einem der Ansprüche 1 bis 8, dadurch gekennzeichnet, dass die Schaufelradabschnitte (8, 9, 15) und/oder das Gebläse (4) bzw. die Gebläsestufen (26, 28) in einzelne Baueinheiten unterteilt sind, welche auf die gemeinsame Welle (2) aufsteckbar und drehsicher mit der gemeinsamen Welle (2) verbindbar sind.

10. Einrichtung nach einem der Ansprüche 1 bis 9, dadurch gekennzeichnet, dass die Lufteintrittsöffnung in das Gebläse (4) unmittelbar an die Luftaustrittsöffnung (27) aus dem letzten Schaufelradabschnitt (8) des Zentrifugalabscheiders (3) anschliesst.

## Claims

1. Apparatus for removing dust particles from an air stream, particularly for the ventilation of mines, comprising a centrifugal separator (3) rotating at an approximately constant speed and having axially aligned blade wheel sections (8, 9) which rotate within a stationary housing and have blades (14) connected with their outer ends to co-rotating peripheral walls (10), the distance of which from the axis increases in the direction of flow of the air, at least one of said blade wheel sections (8, 9) having blades (14) which extend radially approximately in axial planes, and those portions of said peripheral walls (10) which are spaced the largest distance from the axis being formed with passage openings (11) leading to the housing, further comprising a blower (4) for moving the air stream through the centrifugal separator (3), and a device (6, 7) which precedes the centrifugal separator in the direction of flow of the air and serves to spray or atomize water and to deliver it into the air stream entering the centrifugal separator (3), characterized in that the blade wheel section(s) (8, 9) provided with blades (14) extending in axial planes are preceded at the air inlet end (5) of the centrifugal separator (3) by at least one blade wheel section (15) in which those generatrices of the blade surfaces (blades 17) which are equidistant from the axis are inclined at an angle of incidence ($\alpha$) from lines extending in the axial planes (21) parallel to the axis, in a direction which is opposite to the direction in which the resultant vector (R) of the axial air entry velocity vector (v) and the peripheral velocity vector (u) of the blades (17) is inclined with respect to the axial plane (21).

2. Apparatus as claimed in claim 1, characterized in that the angle of incidence ($\alpha$) is smaller than the angle ($\beta$) included by the resultant vector (R) and the axial plane (21).

3. Apparatus as claimed in claim 1, characterized in that the angle of incidence ($\alpha$) is about one-half of the angle ($\beta$) included by the resultant vector (R) and the axial plane (21) .

4. Apparatus as claimed in any one of claims 1 to 3, characterized in that the angle of incidence ($\alpha$) of the blades (17) of the preceding blade wheel section (15) corresponds in all radial length portions of said blades to the value which is in accordance with the peripheral velocity (u) in the respective radial length portion.

5. Apparatus as claimed in claim 4, characterized in that the leading and trailing edges (24, 25) of the blades (17) of the preceding blade wheel section (15) are curved and the intermediate portion of each blade is not warped.

6. Apparatus as claimed in any one of claims 1 to 3, characterized in that the blades (171) of the preceding blade wheel section (15) are plane and have an angle of incidence ($\alpha$) which is in accordance with the mean peripheral velocity (u) obtained in the middle of the radial length of the blades (17).

7. Apparatus as claimed in any one of claims 1 to 6, characterized in that the blower (4) is a radial-flow blower.

8. Apparatus as claimed in any one of claims 1 to 7, characterized in that the centrifugal separator (3) and the blower (4) are mounted on an common shaft (2) .

9. Apparatus as claimed in any one of claims 1 to 8, characterized in that the blade wheel sections (8, 9, 15) and/or the blower (4) or the blower stages (26, 28) , resp., are divided into separate units, which are adapted to be fitted and non-rotatably connected to the common shaft (2).

10. Apparatus as claimed in any one of claims 1 to 9, characterized in that the air inlet opening to the blower (4) directly adjoins the air outlet opening (27) from the last blade wheel section (8) of the centrifugal separator (3).

**Revendications**

1. Dispositif pour séparer les poussières d'un courant d'air, en particulier pou l'aération des mines, comportant un séparateur centrifuge (3), tournant à une vitesse de rotation sensiblement constante, et constitué de roues à pales (8, 9) montées en série dans le sens axial à l'intérieur d'un carter fixe, les pales (14) des roues du séparateur étant raccordées par leurs extrémités à des parois périphériques (10) , tournant avec les pales et présentant un profil qui s'écarte de l'axe dans le sens d'écoulement de l'air, l'une au moins des roues à pales (8, 9) portant des pales (14) disposées suivant des plans axiaux, et des ouvertures de passage (11) débouchant dans l'enceinte du carter étant ménagées dans les parois périphériques (10), pour le courant d'air entraîné par un ventilateur (4) à travers le séparateur centrifuge (3), un système d'injection d'eau (6, 7) étant par ailleurs prévu en amont du séparateur centrifuge (3), dans le sens du courant d'air, pour y injecter de l'eau pulvérisée ou en brouillard, caractérisé en ce qu'il comporte au moins une autre roue à pales (15), montée à l'endroit de l'entrée d'air (5) du séparateur centrifuge (3), en amont du groupe des roues à pales (8, 9) dont les pales (14) sont disposées dans des plans axiaux; cette roue à pales supplémentaire (15) portant des pales (17) qui présentent chacune, à l'endroit de leurs génératrices équidistantes par rapport à l'axe, un angle de calage oblique ($\alpha$) par rapport au plan axial correspondant (21), à l'encontre de l'angle dont est déviée, par rapport au même plan axial (21), la résultante (R) de la vitesse axiale (v) d'entrée de l'air, et de la vitesse tangentielle (u) des pales (17).

2. Dispositif conforme à la revendication 1, caractérisé en ce que l'angle de calage ($\alpha$) est plus faible que l'angle d'obliquité ($\beta$) de la résultante (R) par rapport au plan axial (21).

3. Dispositif conforme à la revendication 1, caractérisé en ce que l'angle de calage ($\alpha$) est égal à environ la moitié de l'angle d'obliquité ($\beta$) de la résultante (R) par rapport au plan axial (21).

4. Dispositif conforme à l'une des revendications 1 à 3, caractérisé en ce que chacune des sections radiales des pales (17) de la roue à pales (15) montée à l'entrée du séparateur centrifuge présente un angle de calage ($\alpha$) ayant une valeur adaptée à celle de la vitesse périphérique (u), en jeu à l'endroit de la section radiale considérée.

5. Dispositif conforme à la revendication 4, caractérisé en ce que les pales (17) de la roue à pales (15) montée à l'entrée du séparateur centrifuge (3) ont chacune un bord d'attaque (24) et un bord de fuite (25) de forme courbe, la zone intermédiaire de la pale ayant un profil droit.

6. Dispositif conforme à l'une des revendications 1 à 3, caractérisé en ce que les pales (17) de la roue à pales (15) montée à l'entrée du séparateur (3) sont des pales planes ayant un angle de calage ($\alpha$) adapté à la valeur moyenne de la vitesse tangentielle (u) existant à mi-longueur de chaque pale (17) dans le sens radial de celle-ci.

7. Dispositif conforme à l'une des revendications 1 à 6, caractérisé en ce que le ventilateur (4) est un ventilateur radial.

8. Dispositif conforme à l'une des revendications 1 à 7, caractérisé en ce que le séparateur centrifuge (3) et le ventilateur (4) sont montés sur un arbre commun (2).

9. Dispositif conforme à l'une des revendications 1 à 8, caractérisé en ce que chacune des roues à pales (8, 9, 15), et/ou chacun des étages (26, 28) du ventilateur (4) sont réalisés sous forme d'éléments séparés, qui peuvent se monter sur l'arbre commun (2) en s'enfilant et en se clavetant sur cet arbre.

10. Dispositif conforme à l'une des revendications 1 à 9, caractérisé en ce que le ventilateur (4) comporte une ouverture d'entrée d'air immédiatement accolée à l'ouverture de sortie d'air (27) de la dernière roue à pales (8) du séparateur centrifuge (3).

FIG.1

FIG.2

FIG.4

FIG.5

FIG.6

*FIG. 3*